(19) Europäisches Patentamt
European Patent Office
Office européen des brevets

(11) Numéro de publication: **0 267 860**
**A2**

(12) # DEMANDE DE BREVET EUROPEEN

(21) Numéro de dépôt: **87430033.8**

(22) Date de dépôt: **05.11.87**

(51) Int. Cl.⁴: **G 01 J 3/46**
G 06 K 9/46, G 06 F 15/62,
A 01 D 46/00

(30) Priorité: **06.11.86 FR 8615618**

(43) Date de publication de la demande:
**18.05.88 Bulletin 88/20**

(84) Etats contractants désignés:
**AT BE CH DE ES GB GR IT LI LU NL SE**

(71) Demandeur: **CENTRE NATIONAL DU MACHINISME AGRICOLE, DU GENIE RURAL, DES EAUX ET DES FORETS (CEMAGREF)**
**Domaine de Lavalette Avenue du Val de Montferrand**
**F-34033 Montpellier Cédex (FR)**

(72) Inventeur: **Rabatel, Gilles Marie Charles**
**18, rue Pila-Saint-Gely**
**F-34000 Montpellier (FR)**

**Davenel, Armel**
**17, rue Paul Gauguin**
**F-34170 Castelnau-le-Lez (FR)**

(74) Mandataire: **Marek, Pierre**
**28 & 32 rue de la Loge**
**F-13002 Marseille (FR)**

(54) **Procédé et dispositif de présélection spectrale analogique en temps réel, par exemple pour système de vision artificielle.**

(57) Procédé de présélection spectrale analogique en temps réel, applicable à un système de vision artificielle équipant une machine robotisée, par exemple destinée à la récolte des fruits et adapté à la détection des fruits dans les arbres, caractérisé en ce que l'on utilise les 3 signaux vidéo synchrones ($V_1$, $V_2$, $V_3$ ) provenant de 3 caméras miniatures ou microcaméras (1, 2, 3), équipées de filtres différents et calées sur la même scène, et en ce qu'un module de présélection analogique constitué par un montage électronique approprié, extrait, à partir de ces trois signaux, une image simplifiée (binaire) sur laquelle les fruits apparaissent en noir sur fond blanc ; cette image binaire étant alors analysée par un module de traitement à microprocesseur qui recherche les tâches noires dans l'image, vérifie leurs propriétés géométriques (dimensions et rondeurs) et indique leurs coordonées (x,y) dans l'image, à un ordinateur principal de commande qui, par l'intermédiaire d'actionneurs appropriés, actionne le bras cueilleur de la machine robotisée de récolte (ou autre organe de préhension ou outil de travail équipant le manipulateur de la machine, dans le cas d'une machine robotisée destinée à accomplir d'autres tâches).

Fig.2

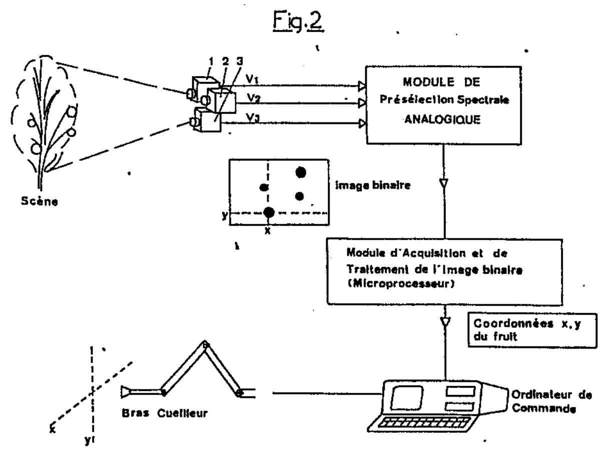


EP 0 267 860 A2

**Description**

Procédé et dispositif de présélection spectrale analogique en temps réel, par exemple pour système de vision artificielle.

La présente invention concerne un procédé et un dispositif de présélection spectrale analogique en temps réel, par exemple pour système de vision artificielle. Elle vise également les systèmes de vision artificielle et les machines robotisées comportant application de ce procédé et de ce dispositif.

Les systèmes de vision artificielle ont généralement pour vocation la localisation et la reconnaissance d'objets dans un champ d'exploration, en vue de l'exécution de tâches relatives à ces objets (déplacement, assemblage, etc.).

Le plus souvent, le temps imparti à l'acte de vision lui-même doit être réduit au minimum (acquisition d'une image, puis analyse logicielle).

Or, par ailleurs, l'analyse exhaustive selon des critères de forme de tous les éléments d'une image conduit à des temps de traitement logiciel relativement longs, si la scène n'est pas extrêmement épurée.

Dans de nombreuses situations, une présélection colorimétrique permettant, par exemple, de ne focaliser l'analyse que sur des régions d'image d'une couleur déterminée, réduirait de façon considérable le temps de localisation et de reconnaissance des objets recherchés, pour autant que cette présélection soit de mise en oeuvre rapide.

La couleur des objets, en tant que stimulus sensoriel, correspond à une caractérisation grossière de leur réponse spectrale à l'éclairement dans le domaine de la lumière visible. Elle peut être entièrement définie par la mesure de la luminosité de l'objet à travers 3 filtres optiques distincts, les 3 grandeurs ainsi obtenues constituant ses composantes colorimétriques.

Soit $V_1$, $V_2$, $V_3$ ces 3 composantes pour un objet donné, sous une source d'éclairement donné. Tout objet de la même couleur, avec éventuellement un niveau de luminosité différent, aura alors des composantes de la forme $\lambda V_1$, $\lambda V_2$, $\lambda V_3$ ($\lambda$ nombre positif).

Autrement dit, chaque couleur correspond à des proportions relatives particulières des valeurs $V_1$, $V_2$, $V_3$ (par exemple : $V_1$ : 30 % ; $V_2$ : 20 % ; $V_3$ : 50 %).

La sélection colorimétrique consiste alors à isoler de tels triplets de composantes, qui correspondent à des vecteurs colinéaires dans un espace vectoriel à 3 dimensions.

Des bases canoniques de référence de cet espace vectoriel des sensations lumineuses ont été définies par la Commission Internationale de l'Eclairage (C.I.E.) : système R, V, B ; système X, Y, Z.

Mais n'importe quel triplet déduit de ceux-ci par combinaison linéaire peut également servir de base de mesure. Il correspond alors à l'utilisation de filtres de mesure particuliers.

L'utilisation de filtres de mesure ne se déduisant pas des références canoniques citées plus haut par combinaisons linéaires, conduit à des caractérisations spectrales qui ne correspondent pas aux sensations visuelles de couleur, mais qui peuvent néanmoins s'adapter judicieusement à la sélection d'objets dans certaines scènes.

De même, on peut élargir le procédé de sélection à des domaines de longueurs d'onde plus larges que le domaine visible, et à un nombre quelconque de n filtres optiques de mesure. ($n \geqq 2$).

Dans ce cas, on utilise n composantes spectrales :

$V_1$, $V_2$, ..., $V_n$.

Chaque classe de vecteurs colinéaires (ou "couleur") peut être définie par (n-1) grandeurs :

$$\frac{V_2}{V_1}, \frac{V_3}{V_1}, \ldots, \frac{V_n}{V_1}$$

qui constituent une caractérisation spectrale indépendante du niveau d'éclairement (mais non des caractéristiques spectrales de l'éclairement lui-même).

La présélection spectrale revient alors à évaluer, avant toute autre analyse, la similitude des composantes spectrales

$$\frac{V_2}{V_1}, \ldots, \frac{V_n}{V_1}$$

avec des composants de références ($r_2$, ...$r_n$) ($V_1$ pouvant éventuellement être remplacé par une combinaison

linéaire de tous les $V_1$, ... Vn).

Toutefois, les méthodes existantes de mise en oeuvre de ce type de présélection passent par une étape de numérisation des signaux, suivie de leur traitement numérique, ce qui conduit soit à des temps de traitement inacceptables dans une application robotique, soit à une lourdeur matérielle excessive, ces inconvénients majeurs constituant des obstacles importants à l'utilisation des machines robotisées capables de travailler dans un environnement aléatoire (récolte de fruits entre les rangées d'arbres d'un verger par exemple).

Le procédé et le dispositif selon l'invention permettent de réaliser une telle présélection colorimétrique de façon instantanée, ainsi que toute autre présélection basée sur les caractéristiques spectrales de réflectance des objets, englobant plus que le concept courant de couleur. Il s'appuie sur l'utilisation d'un équipement électronique simple, de faible coût, basé sur des techniques analogiques. Il peut être utilisé seul, lorsque la seule présélection spectrale suffit à la reconnaissance de l'objet, ou compléter un équipement de vision plus lourd dont il aiguille les recherches.

Le procédé selon l'invention est notamment remarquable par le fait que l'on extrait, au moyen d'un module électronique de présélection analogique et à partir de deux ou plusieurs signaux vidéo synchrones provenant d'un dispositif de prise d'image polychrome et représentant les valeurs des intensités lumineuses d'une scène vue à travers des filtres optiques différents équipant ledit dispositif, une image dite "image de similitude spectrale" dont les niveaux de luminosité, pour chaque point de la scène, représentent le degré de similitude des caractéristiques spectrales par rapport à des caractérisques de référence ; cette image de similitude spectrale étant obtenue à partir de la combinaison électronique sans numérisation préalable des signaux vidéo d'entrée. Cependant, les niveaux de luminosité qui constituent cette image de similitude spectrale, peuvent être sous forme analogique, binaire ou numérique, à la suite de cette combinaison.

Selon un développement de ce procédé, on utilise pour l'obtention de l'image de similitude spectrale de la scène embrassée, les signaux vidéo synchrones provenant de trois caméras miniatures équipées de filtres optiques différents.

Grâce au procédé selon l'invention, il est possible d'obtenir une présélection colorimétrique rapide, à l'aide d'un équipement électronique peu encombrant, simple et de coût relativement réduit.

Dans son application à un système de vision artifielle destiné à l'équipement d'une machine robotisée, l'invention permet d'envisager l'utilisation d'une telle machine pour l'exécution de tâches diverses dans un environnement irrégulier.

Les buts, caractéristiques et avantages ci-dessus, et d'autres encore, ressortiront mieux de la description qui suit et des dessins annexés dans lesquels :

La figure 1 est un schéma d'un exemple de montage électronique constituant un dispositif de présélection analogique à trois voies d'entrées.

La figure 2 est une représentation synoptique du procédé de présélection spectrale analogique selon l'invention appliqué à un système de vision artificielle équipant une machine robotisée de récolte de fruits.

La figure 3 montre un schéma d'initialisation des caractéristiques spectrales de référence du module de présélection analogique, également appliqué à un système de vision artificielle équipant une machine robotisée de récolte de fruits.

La figure 4 est une vue de face, à caractère schématique, d'un assemblage mécanique de trois microcaméras constituant un dispositif de prise d'image polychrome utilisable pour la mise en oeuvre du procédé selon l'invention.

On se reporte auxdits dessins pour décrire un exemple intéressant de mise en oeuvre du procédé et d'exécution du dispositif de présélection spectrale analogique selon l'invention.

Ce procédé est caractérisé par la mise en oeuvre analogique de la sélection, permettant la comparaison instantanée de chaque point d'image avec la référence spectrale prédéterminée (objet type). Il s'applique à tout dispositif de prise d'imag polychrome fournissant n signaux vidéo synchrones. $V_1$ (t), ..., Vn (t), par combinaison électronique de ces signaux.

A chaque instant (t), la valeur sur chaque voie correspond à l'intensité lumineuse d'un même point de la scène à travers un filtre spécifique.

Le résultat doit être un signal R (t) contenant une information de similitude spectrale par rapport à la référence.

Soit $\begin{cases} V_1\ (t), \ldots, Vn\ (t) & : \text{les signaux en provenance du capteur d'image ;} \\ r_2, r_3, \ldots, rn & : \text{les (n-1) grandeurs caractérisant la réponse spectrale à sélectionner} \end{cases}$

Le degré de similitude entre signal et référence peut être évalué par les (n-1) termes élémentaires :

$$/ \frac{V_2}{V_1} - r_2 / , / \frac{V_3}{V_1} - r_3 / , \ldots, / \frac{Vn}{V_1} - rn /$$

Si l'on veut obtenir instantanément une simple variable logique (vraie ou faux), correspondant au critère :

$$/ \frac{V_2}{V_1} - r_2 / \leqslant s_2 , \text{ et } / \frac{V_3}{V_1} - r_3 / \leqslant s_3, \text{ et } \ldots,$$

$$\text{et } / \frac{Vn}{V_1} - rn / \leqslant sn$$

(les seuils $s_2$, ... , sn, sont des seuils d'acceptation de la similitude), il faut pour cela obtenir chacune des variables logiques :

$$Ci\ (t) \Longleftrightarrow (/ \frac{Vi\ (t)}{V_1\ (t)} - ri / \leqslant si)$$

La difficulté d'effectuer la division de 2 signaux en temps réel peut être levée en remarquant que :

$$Ci\ (t) \Leftrightarrow \left[ / \frac{Vi\ (t)}{V_1\ (t)} - ri / \leqslant Si \right] \Leftrightarrow \left[ / Vi\ (t) - ri.V_1\ (t) / \leqslant Si.V_1(t) \right]$$

Il suffit donc d'effectuer à l'aide de comparateurs, la comparaison analogique de 2 signaux dans lesquelles $V_1$ (t) intervient par l'intermédiaire de gains réglables (ri et si).

Si l'on désire obtenir, sur le degré de similitude spectrale, en chaque point par rapport à la référence, une

information plus préçise qu'une simple variable logique, on peut utiliser aux lieu et place des comparateurs, des convertisseurs analogiques digitaux dont la tension de référence est proportionnelle à $V_1$ (t), et dont l'entrée à convertir est le signal / Vi(t) - ri.$V_1$ (t)/. On obtient alors en sortie, en temps réel, la valeur numérique de

$$/ \frac{Vi(t) - ri.V_1(t)}{V_1\ (t)} / = / \frac{Vi(t)}{V_1} - ri /$$

Un exemple de présélection analogique à 3 voies d'entrées à signal de sortie binaire (utilisation de comparateurs) est représenté à la figure 1, les gains ri étant programmables par microprocesseur et les gains si étant des réglages manuels (potentiomètres).

On décrit ci-après un exemple de mise en oeuvre du procédé de présélection spectrale analogique selon l'invention appliqué à un système de vision artificielle équipant une machine robotisée de récolte de fruits et adapté à la détection des fruits dans les arbres.

Dans ce cas, on utilise les 3 signaux vidéo synchrones $V_1$, $V_2$, $V_3$ provenant de 3 caméras miniatures ou microcaméras 1, 2, 3, équipées de filtres différents et calées sur la même scène (figure 2). Le module de présélection analogique constitué par un montage électronique approprié, extrait, à partir de ces trois signaux, une image simplifiée (binaire) sur laquelle les fruits apparaissent en noir sur fond blanc. Cette image binaire est alors analysée par un module de traitement à microprocesseur qui recherche les tâches noires dans l'image, vérifie leurs propriétés géométriques (dimensions et rondeurs) et indique leurs coordonnées x,y dans l'image, à un ordinateur principal de commande qui, par l'intermédiaire d'actionneurs appropriés, actionne le bras cueilleur de la machine robotisée de récolte (ou autre organe de préhension ou outil de travail équipant le manipulateur de la machine, dans le cas d'une machine robotisée destinée à accomplir d'autres tâches).

Selon cette application intéressante du procédé de l'invention, le module de présélection spectrale dispose, en entrée, des 3 signaux vidéo synchrones $V_1(t)$, $V_2(t)$, $V_3(t)$, provenant des 3 microcaméras.

Pour évaluer leurs proportions respectives à chaque instant, on compare les grandeurs

$$\frac{V_2(t)}{V_1(t)} \text{ et } \frac{V_3(t)}{V_1(t)}$$

à des valeurs de référence $r_2$ et $r_3$.

Pour cela, on compare les écarts

$$\left| \frac{V_2}{V_1} - r_2 \right| \text{ et } \left| \frac{V_3}{V_1} - r_3 \right|$$

à des seuils $s_2$ et $s_3$. Un point de l'image binaire de sortie sera donc mis en noir, si pour ce point :

$$(1) \left| \frac{V_2}{V_1} - r_2 \right| < s_2 \quad \text{et} \quad \left| \frac{V_3}{V_1} - r_3 \right| < s_3$$

La difficulté d'effectuer en temps réel les divisions

$$\frac{V_2\ (t)}{V_1(t)} \quad \text{et} \quad \frac{V_3\ (t)}{V_1\ (t)}$$

est levée en considérant l'expression équivalente :

$| V_2 - r_2 \bullet V_1 | < s_2 \bullet V_1$ et $| V_3 - r_3 \bullet V_1 | < s \bullet V_1$

où l'on considère des seuils proportionnels à $V_1$ (t).

Le test (1) peut donc être effectué par simple comparaison de signaux analogiques, dans lesquels $V_1$ (t) intervient, pondéré par des facteurs multiplicatifs $r_1$, $s_1$, $r_2$, $s_2$, c'est-à-dire par des gains réglables.

Suivant l'exemple décrit ci-dessus et illustré à la figure 1, les gains $r_1$, $r_2$ sont commandés numériquement par le microprocesseur du module de traitement, tandis que les gains $s_1$, $s_2$ sont manuels (potentiomètres).

Dans cet exemple, les grandeurs $r_2$, $r_3$ constituent les références de comparaison du module de prétraitement. Elles dépendent de la variété des fruits à détecter (couleurs), mais également des caractéristiques de couleurs de l'éclairage ambiant. Pour cette raison, $r_2$ et $r_3$ doivent être initialisés avant le fonctionnement et réactualisés éventuellement pour suivre les variations d'éclairage (utilisation en extérieur).

Dans l'application précédemment décrite, l'initialisation s'opère en indiquant au système de présélection, un objet dont la couleur correspond à la référence désirée, au moyen d'un curseur que l'opérateur positionne sur un écran vidéo (figure 3). Le module effectue alors la mesure numérique des valeurs $V_1$, $V_2$, $V_3$ en ce point, et en déduit $r_2$ et $r_3$ par calcul :

$$r_2 = \frac{V_2}{V_1} \quad \text{et} \quad r_3 = \frac{V_3}{V_1}$$

Le système de présélection spectrale est alors prêt à fonctionner.

La réactualisation s'opère en utilisant le même procédé, non pas à partir d'un point de l'image indiqué par l'opérateur, mais par mesure sur les fruits au fur et à mesure de leur cueillette.

Une autre méthode d'initialisation consiste à tester quelles sont les valeurs $r_2$ et $r_3$ pour lesquelles on sélectionne des objets de forme ronde et de dimensions voulues dans la scène.

On a représenté, à la figure 4, un assemblage mécanique réglable de trois caméras 1, 2, 3, permettant de régler la convergence de celles-ci en direction d'une même scène située approximativement dans le plan vertical, en fonction de la distance de ce plan par rapport auxdites caméras, dans le but de faire coïncider les 3 images vues par ces dernières et d'exploiter ainsi les propriétés spectrales de ladite scène, sans dispositif diviseur d'image (prisme ou miroir semi-réfléchissant).

Chaque caméra est maintenue par une bague 4, 5, 6, respectivement, enserrant son objectif, ce qui lui confère un degré de liberté en rotation selon son axe optique.

D'autre part :

- la camera 1 est portée par un support fixe 7 avec une aptitude de pivotement autour d'un axe a-a perpendiculaire à son axe optique, par exemple autour d'un axe vertical ;
- la caméra 2 est également portée par ce support fixe, avec une latitude de pivotement autour d'un axe b-b perpendiculaire à l'axe a-a et, par exemple, autour d'un axe horizontal ;
- la caméra 3 est portée par un support 8 monté avec une aptitude de pivotement autour d'un axe d-d parallèle à l'un des axes a-a ou b-b et, par exemple, parallèle à ce dernier, tandis que ladite camera possède un degré de liberté en rotation autour d'un axe c-c perpendiculaire à son axe optique et perpendiculaire à l'axe d-d.

**Revendications**

1. - Procédé de présélection spectrale analogique en temps réel, caractérisé en ce que l'on extrait, au moyen d'un module électronique de présélection analogique et à partir de deux ou plusieurs signaux vidéo synchrones provenant d'un dispositif de prise d'image polychrome et représentant les valeurs des intensités lumineuses d'une scène vue à travers des filtres optiques différents équipant ledit dispositif, une image dite "image de similitude spectrale" dont les niveaux de luminosité, pour chaque point de la scène, représentent le degré de similitude des caractéristiques spectrales par rapport à des caractéristiques de référence ; cette image étant obtenue à partir de la combinaison électronique sans numérisation préalable des signaux vidéo d'entrée.

2. - Procédé suivant la revendication 1, caractérisé en ce que l'on utilise, pour l'obtention de l'image de similitude spectrale de la scène embrassée, les signaux vidéo synchrones provenant de trois caméras

miniatures équipées de filtres optiques différents.

3. - Procédé de présélection spectrale analogique en temps réel, caractérisé par son application à un système de vision artificielle.

4. - Procédé suivant la revendication 3 appliqué à un système de vision artificielle équipant une machine robotisée, par exemple destinée à la récolte de fruits et adapté à la détection des fruits dans les arbres, caractérisé en ce que l'on utilise les 3 signaux vidéo synchrones ($V_1$, $V_2$, $V_3$ ) provenant de 3 caméras miniatures ou microcaméras (1, 2, 3), équipées de filtres différents et calées sur la même scène, et en ce qu'un module de présélection analogique constitué par un montage électronique approprié, extrait, à partir de ces trois signaux, une image simplifiée (binaire) sur laquelle les fruits apparaissent en noir sur fond blanc ; cette image binaire étant alors analysée par un module de traitement à microprocesseur qui recherche les tâches noires dans l'image, vérifie leurs propriétés géométriques (dimensions et rondeurs) et indique leurs coordonées (x,y) dans l'image, à un ordinateur principal de commande qui, par l'intermédiaire d'actionneurs appropriés, actionne le bras cueilleur de la machine robotisée de récolte (ou autre organe de préhension ou outil de travail équipant le manipulateur de la machine, dans le cas d'une machine robotisée destinée à accomplir d'autres tâches).

5. - Procédé selon l'une quelconque des revendications 1 à 4, caractérisé par l'utilisation de comparaisons (respectivement de conversions analogiques-digitales) avec un seuil (respectivement une tension de référence) proportionnel à une combinaison des signaux analogiques d'entrée.

6. - Procédé suivant l'une quelconque des revendications 1 à 5, caractérisé par l'initialisation ou réactualisation des caractéristiques spectrales de référence ($r_2$, $r_3$), par mesure automatique des signaux analogiques d'entrée d'un point défini par ses abscisse et ordonnée dans la scène.

7. - Procédé suivant l'une quelconque des revendications 1 à 6, caractérisé par la détermination automatique des coordonnées du point d'initialisation ou réactualisation, par interaction du dispositif pilote par le système de vision avec la scène.

8. - Procédé selon l'une quelconque des revendications 1 à 5, caractérisé par l'initialisation ou réactualisation des caractéristiques spectrales de référence par analyse des propriétés de l'image correspondant à l'information données par le module d'acquisition et de traitement de l'image binaire, pour différentes valeurs de réglages.

9. - Système de vision artificielle, caractérisé en ce qu'il comporte un dispositif de prise d'image polychrome équipé de filtres différents, un module électronique de présélection spectrale analogique permettant d'obtenir une image de similitude spectrale à partir des signaux vidéo synchrones provenant dudit dispositif de prise d'image, et un module électronique d'acquisition et d'analyse de cette image dans le but, par exemple, d'y reconnaître des objets.

10. - Système de vision artificielle selon la revendication 9, caractérisé en ce que son dispositif de prise d'image est constitué par un ensemble de trois caméras miniatures (1, 2, 3) équipées de filtres optiques différents.

11. - Système de vision artificielle suivant la revendication 10, caractérisé en ce que chaque caméra est montée avec une aptitude de rotation autour de son axe optique et avec une latitude de pivotement autour d'au moins un axe (a-a, b-b, c-c, d-d) perpendiculaire audit axe optique, l'une (2) des caméras étant montée avec une latitude de pivotement autour d'un axe (b-b) perpendiculaire à l'axe de pivotement (a-a) de l'une (1) des deux autres desdites caméras, la troisième (3) de ces dernières étant montée avec une latitude de pivotement autour de deux axes perpendiculaires (c-c , d-d) dont chacun est respectivement parallèle à l'axe de pivotement (a-a, b-b) de l'une des deux premières.

12. - Machine robotisée, par exemple machine robotisée pour la récolte de fruits, comprenant un manipulateur et un ordinateur de commande des mouvements de ce manipulateur, caractérisée en ce qu'elle est équipée d'un système de vision artificielle réalisé selon l'une quelconque des revendications 9 à 11, ou fonctionnant suivant le procédé de l'une quelconque des revendications 3 à 8.

Fig.1

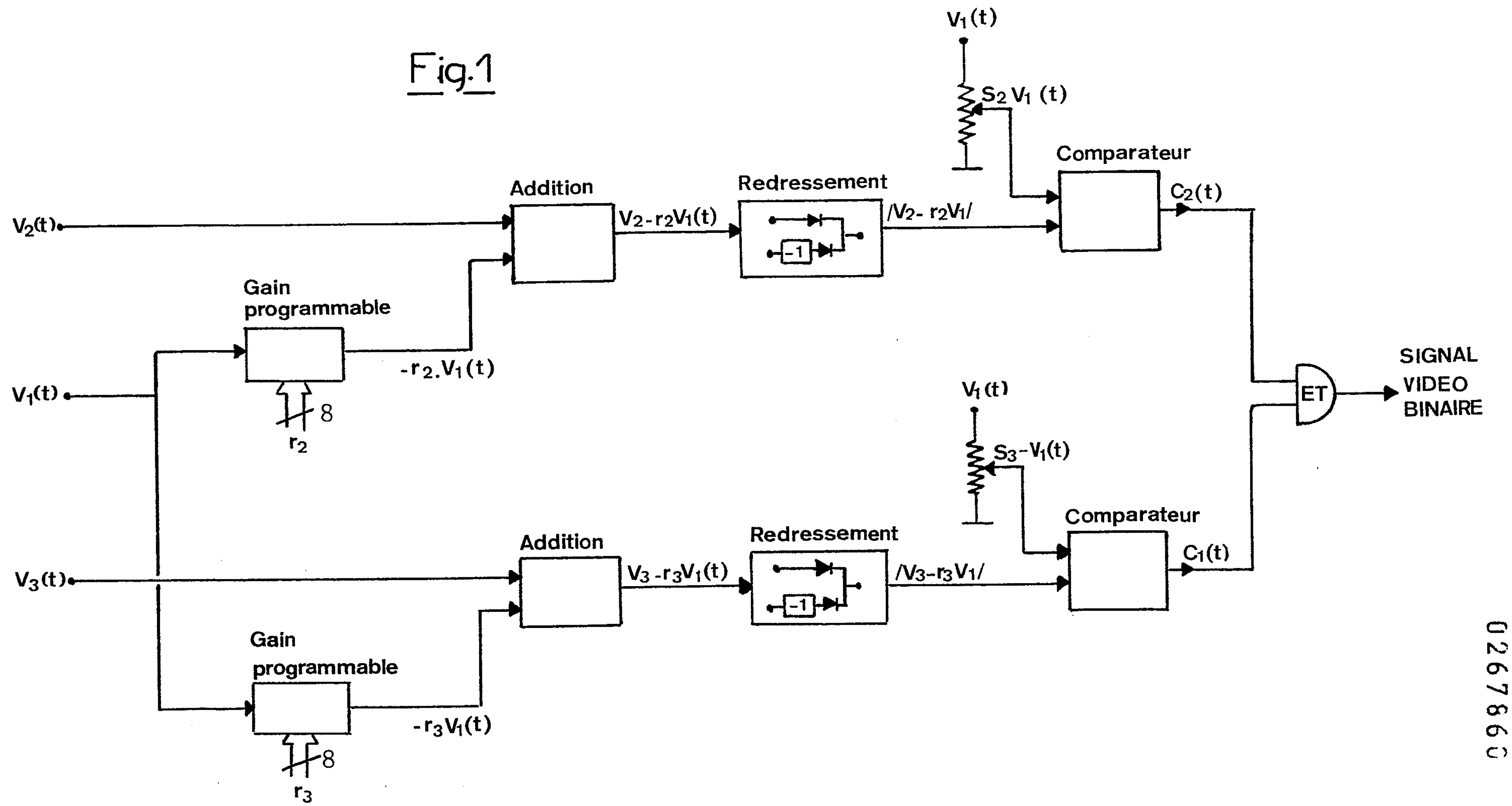

V2(t)
V1(t)
V3(t)
Gain programmable
8
r2
-r2.V1(t)
Gain programmable
8
r3
-r3V1(t)
Addition
V2-r2V1(t)
Addition
V3-r3V1(t)
Redressement
-1
/V2- r2V1/
Redressement
-1
/V3-r3V1/
V1(t)
S2 V1 (t)
V1(t)
S3-V1(t)
Comparateur
C2(t)
Comparateur
C1(t)
ET
SIGNAL
VIDEO
BINAIRE

Fig.2

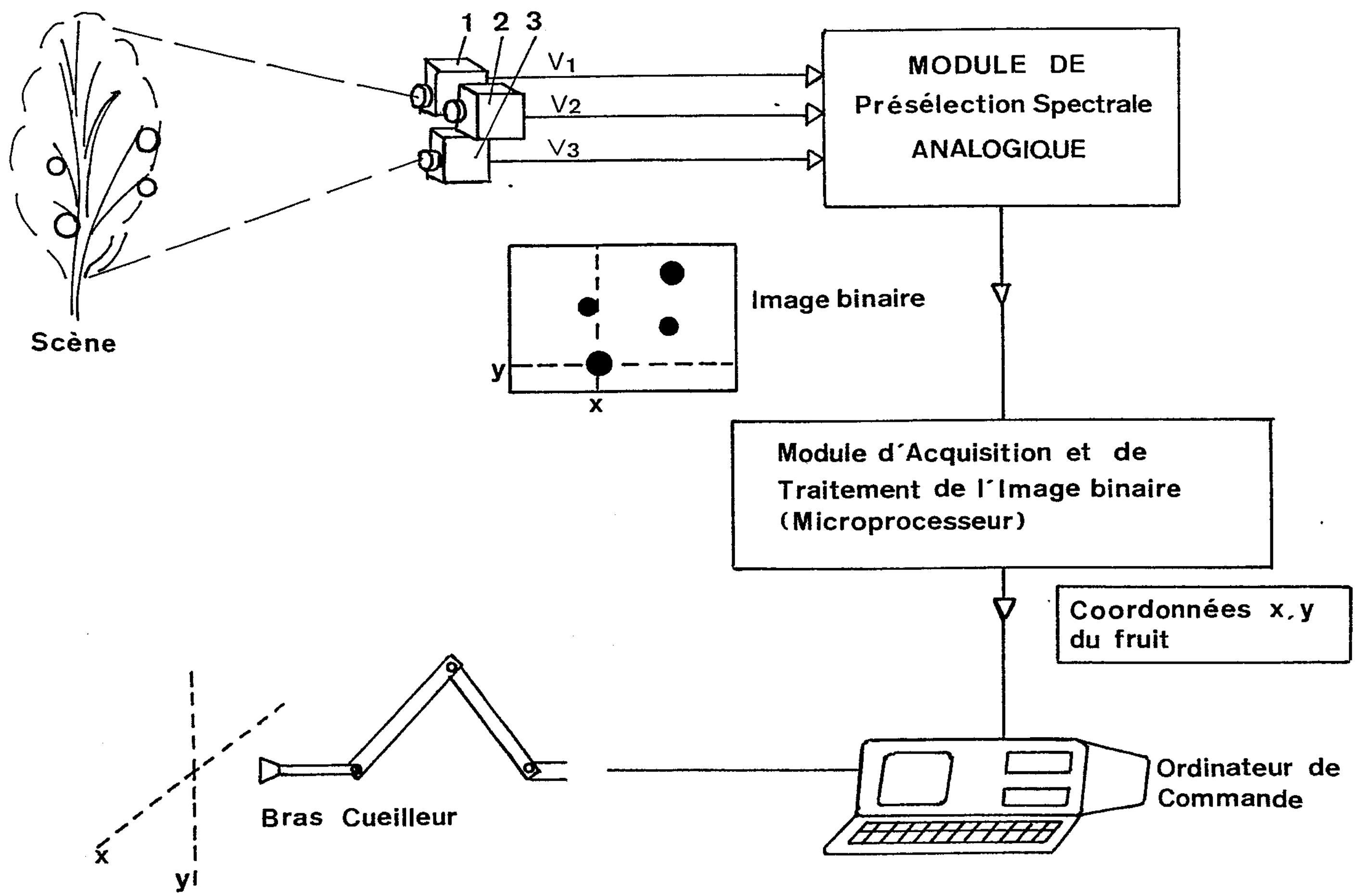

1 2 3
$V_1$
$V_2$
$V_3$
MODULE DE
Présélection Spectrale
ANALOGIQUE
Scène
Image binaire
y
x
Module d'Acquisition et de
Traitement de l'Image binaire
(Microprocesseur)
Coordonnées x, y
du fruit
Bras Cueilleur
x
y
Ordinateur de
Commande

Fig.3

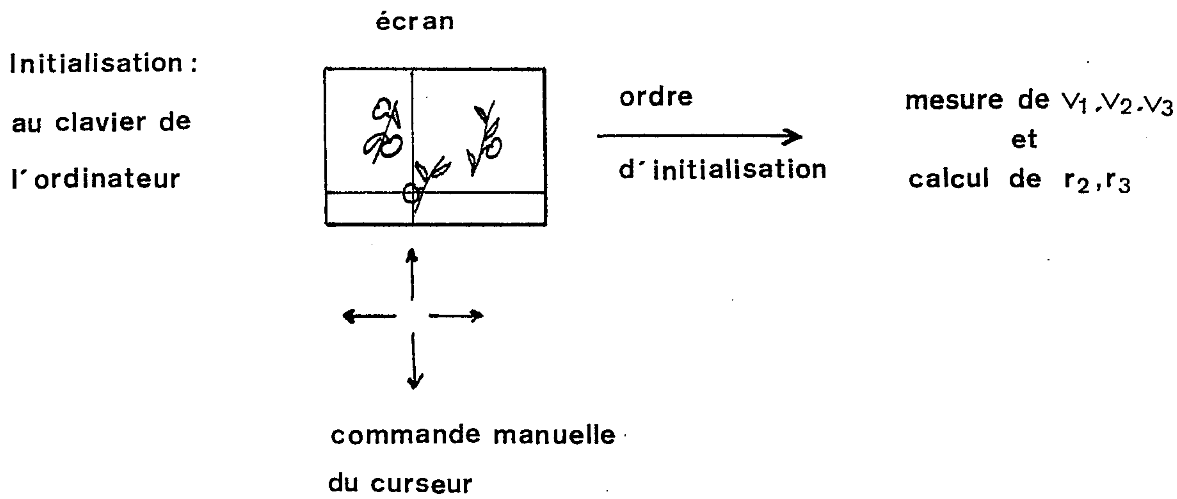
écran
Initialisation :
au clavier de
l'ordinateur
ordre
d'initialisation
mesure de $V_1, V_2, V_3$
et
calcul de $r_2, r_3$
commande manuelle
du curseur

Fig.4

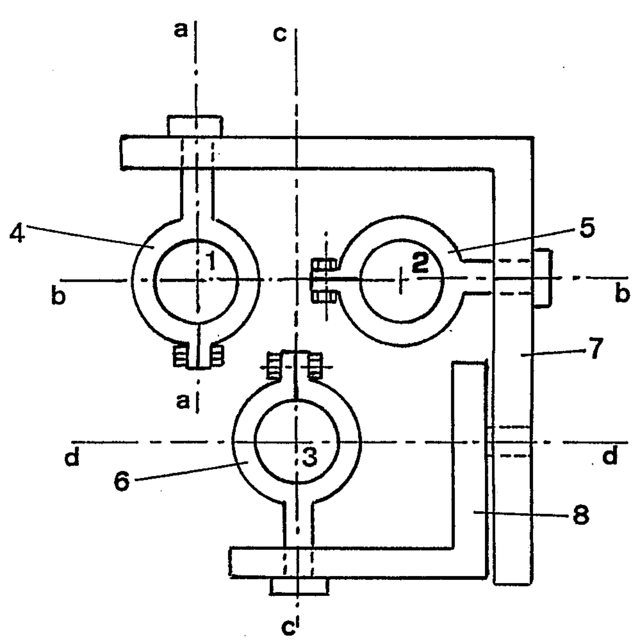
a
c
4
1
2
5
b
b
7
a
3
d
d
6
8
c'